# EUROPÄISCHE PATENTANMELDUNG

(11) **EP 0 841 357 A2**
(43) Veröffentlichungstag der Anmeldung: **13.05.1998**
(21) Anmeldenummer: 97119244.8
(22) Anmeldetag: 04.11.1997
(51) Int. Cl.: C08G 18/08, C08G 18/67, C08F 290/14

(54) **Verfahren zur Herstellung von Polyurethan-Hybrid-Dispersionen**

(30) Priorität: 06.11.1996 DE 19645761
(71) Anmelder: BASF AKTIENGESELLSCHAFT, 67056 Ludwigshafen (DE)
(72) Erfinder: Häberle, Karl Dr., 67346 Speyer (DE); Kokel, Nicolas Dr., 67069 Ludwigshafen (DE); Licht, Ulrike Dr., 68163 Mannheim (DE); Gulbins, Erich Dr., 69120 Heidelberg (DE)
(74) Vertreter: Isenbruck, Günter, Dr.

(57) **Zusammenfassung**

Verfahren zur Herstellung einer Polyurethan-Hybrid-Dispersionen, bei dem mindestens eine Verbindung mit mindestens einer olefinisch ungesättigten Doppelbindung in Gegenwart mindestens eines Polyurethans in einem Gemisch aus Wasser und einem oder mehreren organischen Lösemitteln radikalisch polymerisiert wird, wobei mindestens ein organisches Lösemittel wassermischbar ist, keine olefinisch ungesättigte Doppelbindung und einen Siedepunkt von weniger als 100°C aufweist und nach der radikalischen Polymerisation destillativ entfernt wird.

## Beschreibung

Die Erfindung betrifft ein Verfahren zur Herstellung einer Polyurethan-Hybrid-Dispersion, derartige Dispersionen an sich sowie damit hergestellte Beschichtungsmittelzusammensetzungen und ihre Verwendung als Klebstoff oder Beschichtungsmittel.

Zu den erfolgreichsten Beschichtungsmittelzusammensetzungen, welche auf organischen Lösemitteln basierende Beschichtungsmittelzusammensetzungen immer weiter verdrängen, zählen die wäßrigen Beschichtungsmitteldispersionen, die nur einen geringen oder gar keinen Anteil an organischen Lösemitteln aufweisen. Nützliche Beschichtungsmittel oder Klebstoffe in diesem Anwendungsbereich sind beispielsweise Beschichtungsmittel oder Klebstoffe auf Basis von Polyacrylaten und Urethan-Gruppen enthaltenden Polymeren, wobei unter Beschichtungsmittel oder Klebstoff im Sinne der vorliegenden Erfindung die wäßrige Dispersion der Bindemittel zu verstehen ist. Unter Beschichtungsmittelzusammensetzung wird im folgenden eine Zusammensetzung enthaltend das Beschichtungsmittel oder den Klebstoff und gegebenenfalls weitere Zusatzstoffe verstanden.

Solche Beschichtungsmittel oder Klebstoffe enthalten als Bindemittel eine polymere Komponente, die nach der Trocknung im wesentlichen für die mechanischen und chemischen Eigenschaften der Beschichtung verantwortlich ist. Solche Eigenschaften sind beispielsweise Pendelhärte, Glanz, Lösemittelbeständigkeit, Abriebfestigkeit oder Elastizität. Insbesondere bei der Beschichtung von Materialien mit einer Oberflächenstruktur, wie beispielsweise Holz, spielt die sogenannte "Anfeuerung" eine Rolle. Unter Anfeuerung wird die Fähigkeit eines Beschichtungsmittels verstanden, die Oberflächenstruktur eines Gegenstandes, insbesondere die natürliche Oberflächenstruktur optisch zu betonen und zu verstärken.

Polymere Bindemittel auf Basis von Polyacrylaten sind für eine gute Haftung auf einer Vielzahl von Oberflächen, eine sehr gute Bewitterbarkeit und, abhängig von der Zusammensetzung, auch für eine hervorragende Widerstandsfähigkeit gegenüber Chemikalien und Hydrolyse bekannt.

Polymere Bindemittel auf Basis von Polyurethanen sind als Bestandteile wäßriger Beschichtungsmittel bekannt, da sie über eine Reihe vorteilhafter Eigenschaften verfügen. Hierzu zählen beispielsweise ihre Widerstandsfähigkeit gegen Abrieb, ihre Elastizität und ihr im Vergleich zu Polyacrylaten vorteilhafteres thermoplastisches Verhalten in Beschichtungen. Als Nachteile der Polyurethane müssen ihre schlechte Bewitterbarkeit, Vergilbung durch UV-Strahlung (in der Regel beim Einsatz aromatischer Isocyanatkomponenten), Hydrolyse und geringe Widerstandsfähigkeit gegen Alkalien genannt werden.

Unter den vielen Möglichkeiten, Polyurethane und Polymere aus olefinisch ungesättigten Monomeren in wäßrigen Beschichtungsmitteln miteinander zu kombinieren, hat es sich insbesondere bewährt, diese Monomere in Gegenwart des Polyurethanbindemittels zu polymerisieren, insbesondere in der wäßrigen Lösung oder Dispersion des Polyurethanbindemittels.

Die entstehenden Beschichtungsmittel oder Klebstoffe sollen eine Reihe von Anforderungen erfüllen, die ihren Einsatz in verschiedenartigsten Anwendungen erleichtern. Hierzu zählt beispielsweise ein möglichst schneller Anstieg der Härte der Beschichtung, in der Regel als Pendelhärte gemessen. Ein zügiges Aushärten der Beschichtung oder Verklebung ist beispielsweise im Sinne einer schnellen "Handhabbarkeit" der beschichteten Gegenstände von Vorteil, um eine möglichst zügige Weiterverarbeitung oder generell eine möglichst schnelle Benutzung zu gewährleisten. Ebenfalls von Vorteil ist ein schneller Anstieg der Pendelhärte für die Lagerung der beschichteten Gegenstände, die so beispielsweise schneller stapelbar sind. Eine weitere Anforderung an solche Beschichtungen oder Verklebungen besteht in der Regel darin, daß sie möglichst schnell unempfindlich gegenüber Feuchtigkeit sind. Sollen die Beschichtungsmittelzusammensetzungen beispielsweise für glänzende Decklacke eingesetzt werden, so wird von der Beschichtung ein möglichst hoher Glanz erwartet.

Die DE-PS 43 39 085 beschreibt physikalisch trocknende Überzugsmittel auf wäßriger Basis, die als Bindemittel ein Carbonatgruppen enthaltendes Polyurethan und ein Polyurethan-Acrylat-Hybrid enthält.

Die Offenlegungs- und Patentschriften EP-A1-0 649 865, DE-OS 1 953 349, DE-C1 43 44 063, DE-A1 38 06 066 und die DE-A1 43 42 384 beschreiben Polyurethan-Acrylat-Hybride. Ein Einfluß des gegebenenfalls benutzten Lösemittels oder des Zeitpunkts der Entfernung dieses gegebenenfalls vorhandenen Lösemittels auf die Qualität der Beschichtungen wird in keiner der Druckschriften erwähnt.

Die aus dem Stand der Technik bekannten Polyurethan-Hybrid-Dispersionen sind im Hinblick auf Glanz, Anfeuerung und Härtungsgeschwindigkeit nicht immer befriedigend.

Aufgabe der vorliegenden Erfindung war es daher, ein Verfahren zur Verfügung zu stellen, das es erlaubt, Polyurethan-Hybrid-Dispersionen zu erhalten, die im Hinblick auf Glanz, Anfeuerung und Härtungsgeschwindigkeit gute Ergebnisse erzielen.

Überraschenderweise wurde nun gefunden, daß die Qualität und die Härtungseigenschaften einer aus Polyurethan-Hybrid-Dispersionen erhältlichen Beschichtung oder Verklebung in einer für den Fachmann nicht vorhersehbaren Weise von der Art des während der radikalischen Polymerisation vorliegenden Lösemittels und vom Zeitpunkt der destillativen Entfernung des Lösemittels abhängt.

Gegenstand der vorliegenden Erfindung ist daher ein Verfahren zur Herstellung einer Polyurethan-Hybrid-Dispersion, bei dem mindestens eine Verbindung mit mindestens einer olefinisch ungesättigten Doppelbindung in Gegenwart mindestens eines Polyurethans in einem Gemisch aus Wasser und einem oder mehreren organischen Lösemitteln radikalisch polymerisiert wird, wobei mindestens ein organisches Lösemittel wassermischbar ist, keine olefinisch ungesättigte Doppelbindung und einen Siedepunkt von weniger als 100 °C aufweist und nach der radikalischen Polymerisation destillativ entfernt wird.

Gegebenenfalls kann das mindestens eine Polyurethan eine olefinische Doppelbindung enthalten.

Die Beschichtungsmittelzusammensetzungen der vorliegenden Erfindung zeichnen sich dadurch aus, daß sie die erfindungsgemäßen Polyurethan-Hybrid-Dispersionen (PHD) als Beschichtungsmittel oder Klebstoff enthalten. Zusätzlich können gegebenenfalls noch weitere, von der angestrebten Verwendung der Beschichtungsmittelzusammensetzung abhängige Zusatzstoffe enthalten sein.

Grundsätzlich können im Sinne der Erfindung alle in Beschichtungsmittelzusammensetzungen einsetzbaren Polyurethane verwendet werden. Hierzu zählen auch solche, die in der Regel nur durch Zusatz von Emulgatoren, Dispergatoren und/oder Schutzkolloiden in eine wäßrige Dispersion überführbar sind. Solche Dispersionen zeigen jedoch in der Regel eine unbefriedigende Resistenz gegenüber Feuchtigkeit und damit verbundener Hydrolyse.

Daher sind die in Wasser im wesentlichen selbstdispergierbaren Polyurethane, erhältlich durch Umsetzung von
a) Polyisocyanaten mit
b1) Polyolen mit einem Molekulargewicht von 500 oder mehr
b2) Polyolen mit einem Molekulargewicht von weniger als 500 oder Gemischen von b1) und b2) und
c) gegebenenfalls gegenüber Isocyanaten ein- oder mehrwertigen Verbindungen, die primäre und/oder sekundäre Aminogruppen und gegebenenfalls weitere funktionelle Gruppen aufweisen, mit einem Molekulargewicht von höchstens etwa 500 und
d) gegebenenfalls Verbindungen mit mindestens einer gegenüber Isocyanaten reaktionsfähigen Gruppe und mindestens einer durch Basen- oder Säurezugabe oder durch Quaternisierung ionisierbaren Gruppe und
e) gegebenenfalls Verbindungen mit mindestens einer gegenüber Isocyanaten reaktionsfähigen Gruppe und mindestens einer olefinisch ungesättigten Doppelbindung,
als Polyurethane im Sinne der vorliegenden Erfindung bevorzugt.

Unter *"in Wasser im wesentlichen selbstdispergierbare Polyurethane"* werden im erfindungsgemäßen Sinne Polyurethane verstanden, die durch Zusatz lediglich geringer Mengen oder sogar ganz ohne Zusatz von Dispergierhilfen in Wasser dispergierbar sind. Die erfindungsgemäß bevorzugt einzusetzenden Polyurethane erfordern höchstens einen Zusatz von Dispergierhilfen in einer Größenordnung von etwa 5 Gew.-%, bevorzugt weniger als 3 Gew.-% und insbesondere bevorzugt weniger als 1 Gew.-% bezogen auf die Trockenmasse der Dispersion und insbesondere bezogen auf die Masse der Bindemittel in der Dispersion.

Unter Bindemitteln oder polymeren Bindemitteln werden im erfindungsgemäßen Sinne diejenigen polymeren Bestandteile der Dispersion verstanden, die am Aufbau der trockenen Beschichtung oder Verklebung beteiligt sind und der Beschichtung oder Verklebung mechanische Stabilität verleihen.

Der Begriff *"Trocknung"* bezieht sich im Rahmen der vorliegenden Erfindung auf die Reduzierung des Lösemittelgehalts der Beschichtung bis zum Erreichen einer klebfreien, mechanisch stabilen Oberfläche, wobei unter *"Lösemittel"* sowohl organische Lösemittel wie auch Wasser als kontinuierliche Phase verstanden werden.

Organische Lösemittel mit einem Siedepunkt von mehr als 100°C (z.B. N,N-Dimethylformamid (DMF), N,N-Dimethylacetamid (DMAc) oder N-Methyl-Pyrrolidon (NMP)) können in den erfindungsgemäßen Polyurethandispersionen in untergeordneten Mengen vorhanden sein, beispielsweise in einer Menge von maximal etwa 15 Gew.-%, bevorzugt weniger als 10 Gew.-% und besonders bevorzugt weniger als 8 Gew.-%, bezogen auf die gesamte Dispersion.

Als Komponente a) zur Herstellung der erfindungsgemäßen Polyurethane kommen die üblicherweise in der Polyurethanchemie eingesetzten Polyisocyanate in Betracht.

Insbesondere zu nennen sind Diisocyanate X(NCO)₂, wobei X für einen aliphatischen Kohlenwasserstoffrest mit vier bis zwölf Kohlenstoffatomen, einen cycloaliphatischen oder aromatischen Kohlenwasserstoffrest mit sechs bis fünfzehn Kohlenstoffatomen oder einen araliphatischen Kohlenwasserstoffrest mit sieben bis fünfzehn Kohlenstoffatomen steht. Beispiele derartiger Diisocyanate sind Tetramethylendiisocyanat, Hexamethylendiisocyanat, Dodecamethylendiisocyanat, 1,4-Diisocyanatocyclohexan, 1-Isocyanato-3,3,5-trimethyl-5-isocyanatomethylcyclohexan (IPDI), 2,2-Bis-(4-isocyanatocyclohexyl)-propan, Trimethylhexandiisocyanat, 1,4-Diisocyanatobenzol, 2,4-Diisocyanatotoluol, 2,6-Diisocyanatotoluol, 4,4'-Diisocyanato-diphenylmethan, Tetramethylxylylendiisocyanat (TMXDI), 2,4'-Diisocyanato-diphenylmethan, p-Xylylendiisocyanat, die Isomeren des Bis-(4-isocyanatocyclohexyl)methans, wie das trans/trans-, das cis/cis- und das cis/trans-Isomere sowie aus diesen Verbindungen bestehende Gemische.

Als Gemische dieser Isocyanate sind besonders die Gemische der jeweiligen Strukturisomeren von Diisocyanatotoluol und Diisocyanatodiphenylmethan von Bedeutung, insbesondere das Gemisch aus 80 mol-% 2,4-Diisocyanatotoluol und 20 mol-% 2,6-Diisocyanatotoluol geeignet. Weiterhin sind die Gemische von aromatischen Isocyanaten, wie 2,4-Diisocyanatotoluol und/oder 2,6-Diisocyanatotoluol mit aliphatischen oder cycloaliphatischen Isocyanaten, wie Hexamethylendiisocyanat oder IPDI besonders vorteilhaft, wobei das bevorzugte Mischungsverhältnis der aliphatischen zu den aromatischen Isocyanaten etwa 4 : 1 bis 1 : 4 beträgt.

Als Komponente a) kann man auch Isocyanate einsetzen, die neben den freien Isocyanatgruppen weitere verkappte Isocyanatgruppen, z.B. Uretidongruppen, tragen.

Gegebenenfalls können auch solche Isocyanate mitverwendet werden, die nur eine Isocyanatgruppe tragen. Im allgemeinen beträgt ihr Anteil maximal 10 mol-%, bezogen auf die gesamte Molmenge der Monomere. Die Monoisocyanate tragen üblicherweise weitere funktionelle Gruppen, wie olefinische Gruppen oder Carbonylgruppen und dienen zur Einführung von funktionellen Gruppen in das Polyurethan, die die Dispergierung bzw. Vernetzung oder weitere polymeranaloge Umsetzungen des Polyurethans ermöglichen. In Betracht kommen hierfür Verbindungen wie Isopropenyl-α,α-dimethylbenzylisocyanat (TMI).

Um Polyurethane mit einem gewissen Verzweigungs- oder Vernetzungsgrad herzustellen, können z.B. drei- und/oder vierwertige Isocyanate eingesetzt werden. Derartige Isocyanate werden z.B. erhalten, indem man zweiwertige Isocyanate derart miteinander umsetzt, daß ein Teil ihrer Isocyanatgruppen zu Allophanat-, Biuret- oder Isocyanuratgruppen derivatisiert wird. Handelsübliche Verbindungen sind beispielsweise das Isocyanurat oder das Biuret des Hexamethylendiisocyanats.

Weitere geeignete höherfunktionelle Polyisocyanate sind z.B. Urethangruppen aufweisende Polyisocyanate auf Basis von 2,4- und/oder 2,6-Diisocyanatotoluol, IPDI oder Tetramethylendiisocyanat einerseits und niedermolekularen Polyhydroxyverbindungen wie Trimethylolpropan andererseits.

Im Hinblick auf gute Filmbildung und Elastizität kommen als Komponente b1) vornehmlich höhermolekulare Polyole, bevorzugt Diole, in Betracht, die ein Molekulargewicht von mehr als 500, beispielsweise etwa 500 bis 5.000, vorzugsweise von etwa 1.000 bis etwa 3.000 g/mol, haben.

Bei den Polyolen der Komponente b1) handelt es sich insbesondere um Polyesterpolyole, die z.B. aus Ullmanns *Enzyklopädie der technischen Chemie*, 4. Aufl., Bd. 19, S. 62-65, bekannt sind. Bevorzugt werden Polyesterpolyole eingesetzt, die durch Umsetzung von zweiwertigen Alkoholen mit mehrwertigen, bevorzugt zweiwertigen Polycarbonsäuren erhalten werden. Die Polycarbonsäuren (Komponente b1.1)) können aliphatisch, cycloaliphatisch, araliphatisch, aromatisch oder heterocyclisch sein und gegebenenfalls z.B. durch Halogenatome substituiert und/oder ungesättigt sein. Als Beispiele hierfür seien genannt Korksäure, Azelainsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure und/oder dimere Fettsäuren. Die genannten Polycarbonsäuren können entweder einzeln als ausschließliche Säurekomponente oder im Gemisch untereinander zum Aufbau der Komponente b1) eingesetzt werden. Bevorzugt sind die Carbonsäuren der allgemeinen Formel HOOC-(CH₂)_{y}-COOH, wobei y eine Zahl von 1 bis 20, bevorzugt eine gerade Zahl von 2 bis 20, ist, z.B. Bernsteinsäure, Adipinsäure, Dodecandicarbonsäure und Sebacinsäure. Anstelle der freien Polycarbonsäuren können als Komponente b1.1) auch die entsprechenden Polycarbonsäureanhydride oder entsprechenden Polycarbonsäureester von niederen Alkoholen oder deren Gemische zur Herstellung der Polyesterpolyole verwendet werden.

Als mehrwertige Alkohole zur Reaktion mit der Polycarbonsäurekomponente zum Aufbau der Komponente b1) kommen als Komponente b1.2) z.B. Ethylenglycol, Propan-1,2-diol, Propan-1,3-diol, Butan-1,3-diol, Buten-1,4-diol, Butin-1,4-diol, Pentan-1,5-diol, Hexan-1,6-diol, Neopentylglycol, Bis-(hydroxymethyl)cyclohexane, wie 1,4-Bis(hydroxymethyl)cyclohexan, 2-Methylpropan-1,3-diol, Methylpentandiole, ferner Diethylenglycol, Triethylenglycol, Tetraethylenglycol, Polyethylenglycol, Dipropylenglycol, Polypropylenglycole, Dibutylenglycol und Polybutylenglycol in Betracht. Bevorzugt sind Neopentylglycol und Alkohole der allgemeinen Formel HO-(CH₂)ₓ-OH, wobei x eine Zahl von 1 bis 20, bevorzugt eine gerade Zahl von 2 bis 20, ist. Beispiele hierfür sind Ethylenglycol, Butan-1,4-diol, Hexan-1,6-diol, Octan-1,8-diol und Dodecan-1,12-diol.

Ebenfalls geeignet sind Polyetherdiole, bevorzugt Polyoxyethylenalkohole mit einer Molmasse von wenigstens etwa 150, bevorzugt wenigstens etwa 200, die hydrophile Abschnitte in den Polyester integrieren und gegebenenfalls für Selbstdispergierbarkeit des Polyesters oder des daraus hergestellten Polyurethans sorgen oder zumindest die Dispergierbarkeit erleichtern.

Ferner kommen als Komponente b1) auch Polycarbonatdiole, wie sie z.B. durch Umsetzung von Phosgen mit einem Überschuß von den als Aufbaukomponenten für die Polyesterpolyole genannten niedermolekularen Alkohole b1.2) erhalten werden können, in Betracht. In der Regel werden die erfindungsgemäßen Polyurethan-Hybrid-Dispersionen jedoch unter Vermeidung carbonathaltiger Polyurethane hergestellt und enthalten in diesem Fall keine Carbonatgruppen.

Geeignet sind als Komponente b1) auch Polyesterdiole auf Lacton-Basis, wobei es sich um Homo- oder Mischpolymerisate von Lactonen, bevorzugt um endständige Hydroxylgruppen aufweisende Anlagerungsprodukte von Lactonen an geeignete difunktionelle Startermoleküle handelt. Es kommen bevorzugt solche Lactone in Betracht, die sich von Verbindungen der allgemeinen Formel HO-(CH₂)_{z}-COOH ableiten, wobei z eine Zahl von 1 bis 20 ist. Beispiele sind ε-Caprolacton, β-Propiolacton, γ-Butyrolacton und/oder Methyl-ε-caprolacton sowie deren Gemische. Geeignete Starterkomponenten sind z.B. die vorstehend als Aufbaukomponente b1.2) für die Polyesterpolyole genannten niedermolekularen zweiwertigen Alkohole. Die entsprechenden Polymerisate des ε-Caprolactons sind besonders bevorzugt. Auch niedermolekulare Polyesterdiole oder Polyetherdiole können als Starter zur Herstellung der Lactonpolymerisate eingesetzt werden. Anstelle der Polymerisate von Lactonen können auch die entsprechenden chemisch äquivalenten Polykondensate der den Lactonen entsprechenden Hydroxycarbonsäuren eingesetzt werden.

Die Polyesterpolyole können auch unter Zuhilfenahme untergeordneter Mengen an mono- und/oder höherfunktionellen Monomeren aufgebaut werden.

Daneben kommen als Komponente b1) Polyetherdiole in Betracht. Sie sind insbesondere durch Polymerisation von Ethylenoxid, Propylenoxid, Butylenoxid, Tetrahydrofuran, Styroloxid oder Epichlorhydrin mit sich selbst, z.B. in Gegenwart von BF₃ oder durch Anlagerung dieser Verbindungen gegebenenfalls im Gemisch oder nacheinander, an Startkomponenten mit reaktionsfähigen Wasserstoffatomen, wie Wasser, Alkohole oder Amine, z.B. Ethylenglycol, Propan-1,2-diol, Propan-1,3-diol, 1,2-Bis(4-hydroxydiphenyl)-propan oder Anilin, erhältlich. Besonders bevorzugt ist Polytetrahydrofuran mit einem Molekulargewicht von mehr als etwa 180, bevorzugt von etwa 240 bis 5.000 und besonders bevorzugt von etwa 500 bis etwa 4.500.

Bei der Verwendung geeigneter Polyether mit Polyoxyethyleneinheiten mit einem Molekulargewicht von wenigstens etwa 150, bevorzugt wenigstens etwa 200 zur Herstellung der Polyurethane lassen sich in Wasser selbstdispergierbare Polyurethane herstellen, die ohne Verwendung weiterer hydrophiler Struktureinheiten im Polyurethan auskommen.

Sowohl zur Herstellung der Polyesterpolyole als auch zur Herstellung der Polyetherpolyole können Alkohole mit einer Funktionalität von mehr als zwei in untergeordneten Mengen als Komponente b1.3) eingesetzt werden. Insbesondere sind dies Verbindungen wie beispielsweise Trimethylolpropan, Pentaerythrit, Glycerin, Zucker, wie beispielsweise Glucose, oligomerisierte Polyole wie beispielsweise di- oder trimere Ether von Trimethylolpropan, Glycerin oder Pentaerythrit, teilveresterte polyfunktionelle Alkohole der oben beschriebenen Form, wie beispielsweise teilverestertes Trimethylolpropan, teilverestertes Glycerin, teilveresterter Pentaerythrit, teilverestertes Polyglycerin und dergleichen, wobei zur Veresterung vorzugsweise monofunktionelle aliphatische Carbonsäuren benutzt werden. Gegebenenfalls können die Hydroxylgruppen der Polyole durch Umsetzung mit Alkylenoxiden verethert sein. Die vorstehenden Verbindungen sind ebenfalls als Starterkomponente zum Aufbau der Polyetherpolyole geeignet.

Vorzugsweise werden die Polyolverbindungen der Komponente b1.3) mit einer Funktionalität > 2 nur in untergeordneten Mengen zum Aufbau der Polyesterpolyole bzw. Polyetherpolyole herangezogen.

Ebenfalls als Komponente b1) geeignet sind Polyhydroxyolefine, bevorzugt solche mit zwei endständigen Hydroxylgruppen, z.B. α,ω-Dihydroxypolybutadien, α,ω-Dihydroxypolymethacrylester oder α,ω-Dihydroxypolyacrylester.

Die als Komponente b1) einsetzbar aufgezählten Polyole können auch als Gemische in beliebigen Verhältnissen eingesetzt werden.

Die Härte und das Elastizitätsmodul der Polyurethane läßt sich noch erhöhen, wenn als Polyole b2) neben den Polyolen b1) noch niedermolekulare Di- oder Polyole, vorzugsweise Diole b2) mit einem Molekulargewicht von weniger als 500, vorzugsweise 62 bis 500 und besonders bevorzugt 62 bis 200 g/mol eingesetzt werden.

Als Komponente b2) werden vor allem die als Komponente b1.2) bezeichneten kurzkettigen Alkandiole eingesetzt, wobei Neopentylglycol und die unverzweigten Diole mit 2 bis 12 C-Atomen, wie beispielsweise Ethylenglycol, 1,4-Butandiol, 1,5-Pentandiol oder 1,6-Hexandiol bevorzugt werden. Gegebenenfalls kann die Komponente b2) in untergeordneten Mengen auch höherfunktionelle Alkohole, wie sie beispielsweise als Komponente b1.3) beschrieben sind, beinhalten.

Die zum Aufbau der erfindungsgemäßen Polyurethane beschriebenen Komponenten b1) und b2) können auch als Gemische von b1) und b2) im Sinne der Erfindung eingesetzt werden. Hierbei beträgt der Anteil der Polyole b1), bezogen auf die Gesamtmenge der Polyole b1) plus b2), etwa 9 bis 100 mol-% und der Anteil der Polyole b2), bezogen auf die Gesamtmenge der Polyole b1) plus b2), etwa 0 bis 91 mol-%. Bevorzugt beträgt das Verhältnis der Polyole b2) zu den Polyolen b1) damit etwa 10 : 1 bis 0 : 1, besonders bevorzugt etwa 8 : 1 bis 0 : 1.

Als Komponente c) können beispielsweise Kettenverlängerungsmittel oder zur Einführung von Verzweigungen geeignete, mehr als zweiwertige Verbindungen eingesetzt werden, die mindestens eine primäre oder sekundäre oder, insofern mehr als eine Aminogruppe pro Molekül vorhanden ist, auch primäre und sekundäre Aminogruppen gleichzeitig aufweisen können.

Neben den Aminogruppen können die Verbindungen der Komponente c) noch weitere funktionelle Gruppen, insbesondere Isocyanaten gegenüber reaktive Gruppen, aufweisen. Hierzu zählen insbesondere die Hydroxylgruppe oder die Mercaptogruppe.

Zu den im Sinne der Erfindung als Komponente c) einsetzbaren Verbindungen zählen beispielsweise Monoaminoalkohole mit einer aliphatisch gebundenen Hydroxylgruppe, wie Ethanolamin, N-Methyl-ethanolamin, N-Ethyl-ethanolamin, N-Butyl-ethanolamin, N-Cyclohexyl-ethanolamin, N-tert.-Butyl-ethanolamin, Leucinol, Isoleucinol, Valinol, Prolinol, Hydroxyethylanilin, 2-(Hydroxymethyl)-piperidin, 3-(Hydroxymethyl)-piperidin, 2-(2-Hydroxyethyl)-piperidin, 2-Amino-2-phenylethanol, 2-Amino-1-phenylethanol, Ephedrin, p-Hydroxyephedrin, Norephedrin, Adrenalin, Noradrenalin, Serin, Isoserin, Phenylserin, 1,2-Diphenyl-2-amino-ethanol, 3-Amino-1-propanol, 2-Amino-1-propanol, 2-Amino-2-methyl-1-propanol, Isopropanolamin, N-Ethyl-isopropanolamin, 2-Amino-3-phenylpropanol, 4-Amino-1-butanol, 2-Amino-1-butanol, 2-Aminoisobutanol, Neopentanolamin, 2-Amino-1-pentanol, 5-Amino-1-pentanol, 2-Ethyl-2-butyl-5-aminopentanol, 6-Amino-1-hexanol, 2-Amino-1-hexanol, 2-(2-Aminoethoxy)-ethanol, 3-(Aminomethyl)-3,5,5-trimethylcyclohexanol, 2-Aminobenzylalkohol, 3-Aminobenzylalkohol, 3-Amino-5-methylbenzylalkohol, 2-Amino-3-methylbenzylalkohol.

Wenn der Einsatz von Komponente c) beispielsweise der Erzeugung von Kettenverzweigungen dienen soll, so lassen sich z.B. Monoaminopolyole mit zwei aliphatisch gebundenen Hydroxylgruppen, wie 1-Amino-2,3-propandiol, 2-Amino-1,3-propandiol, 2-Amino-2-methyl-1,3-propandiol, 2-Amino-2-ethyl-1,3-propandiol, 2-Amino-1-phenyl-1,3-propandiol, Diethanolamin, Diisopropanolamin, 3-(2-Hydroxyethylamino)propanol und N-(3-Hydroxypropyl)-3-hydroxy-2,2-dimethyl-1-aminopropan einsetzen.

Ebenfalls möglich ist der Einsatz von Polyaminen als Komponente c). Hierzu zählen beispielsweise Verbindungen wie Hydrazin, Ethylendiamin, 1,2- und 1,3-Propylendiamin, Butylendiamine, Pentamethylendiamine, Hexamethylendiamine wie beispielsweise das 1,6-Hexamethylendiamin, Alkylhexamethylendiamine wie beispielsweise das 2,4-Dimethylhexamethylendiamin, allgemein Alkylendiamine mit bis zu etwa 44 C-Atomen, wobei auch cyclische oder polycyclische Alkylendiamine eingesetzt werden können wie sie z.B. aus den Dimerisierungsprodukten ungesättigter Fettsäuren im bekannter Weise gewonnen werden können. Ebenfalls einsetzbar, aber nicht bevorzugt, sind aromatische Diamine wie beispielsweise 1,2-Phenylendiamin, 1,3-Phenylendiamin oder 1,4-Phenylendiamin. Ferner können im Sinne der Erfindung höhere Amine, wie z.B. Diethylentriamin, Aminomethyldiaminooctan-1,8 und Triethylentetramin eingesetzt werden.

Um die Wasserdispergierbarkeit der Polyurethane zu erreichen, werden in die Polyurethane in der Regel hydrophilierende, nicht-ionische, anionische oder kationische bzw. in anionische oder kationische Gruppen umwandelbare Struktureinheiten eingebaut.

Unter *"in anionische oder kationische Gruppen umwandelbare Struktureinheiten"* werden im Sinne der vorliegenden Erfindung solche Struktureinheiten verstanden, die durch eine einfache chemische Reaktion, wie beispielsweise Säurezugabe, Basenzugabe oder Quaternisierung mit z.B. Alkylhalogeniden, in eine ionische Form umgewandelt werden können. Beispiele hierfür sind Säuregruppen, primäre, sekundäre und/oder tertiäre Amine oder Säureamide.

Neben den Komponenten a), b1), b2) und/oder c) werden bei der Herstellung der erfindungsgemäßen Polyurethane, insofern die Wasserdispergierbarkeit nicht schon durch den Einbau geeigneter Polyetherketten im Rahmen des Einbaus der Komponenten b1) und/oder b2) gegeben ist, als Komponente d) Verbindungen mit mindestens einer gegenüber Isocyanaten reaktionsfähigen Gruppe und mindestens einer durch Basen- oder Säurezugabe oder durch Quaternisierung ionisierbaren Gruppe oder einer schon durch eine solche Reaktion ionisierten Gruppe eingebaut. Im folgenden Text werden die Begriffe *"anionische Gruppen"* und *"kationische Gruppen"* sowohl für die durch Säuren- oder Basenzugabe oder durch Quaternisierung ionisierten Gruppen als auch für die freien Säuren oder freien Basen synonym gebraucht, insofern keine anderslautenden Angaben gemacht sind. Die anionischen oder kationischen Gruppen reagieren mit Isocyanaten wesentlich langsamer als die funktionellen Gruppen der Komponente d), die zum Aufbau der Polymerhauptkette dienen.

Der Anteil der Komponenten mit anionischen oder kationischen Gruppen an der Gesamtmenge der Komponenten a), b1), b2) und c), insofern sie zur Herstellung des Polyurethans benutzt werden, wird im allgemeinen so bemessen, daß die Molmenge der anionischen oder kationischen Gruppen, bezogen auf die Gewichtsmenge aller eingesetzten Komponenten, 30 bis 1.000, bevorzugt 50 bis 600 und besonders bevorzugt 80 bis 500 mmol/kg beträgt. In jedem Fall ist der Anteil der Komponente d) jedoch mindestens so hoch, daß das entstehende Polyurethan in Wasser wenigstens weitgehend selbst dispergierbar ist.

Als Komponente d) werden vor allem anionische Gruppen tragende Verbindungen, wie Sulfonat-, Carboxylat- und Phosphonatgruppen tragende Verbindungen in das Polyurethan eingebaut. Die anionischen Gruppen werden entweder in Form der freien Säure oder aber bevorzugt in Form ihrer Alkalimetall- oder Ammoniumsalze eingebaut, wobei als Gegenionen kationische Gruppen, wie Ammoniumgruppen, insbesondere protonierte tertiäre Aminogruppen oder quartäre Ammoniumgruppen, besonders geeignet sind.

Potentielle ionische hydrophile Gruppen sind vor allem solche, die sich durch einfache Neutralisations-, Hydrolyse- oder Quaternisierungsreaktionen in die oben genannten ionischen hydrophilen Gruppen überführen lassen, also z.B. Carbonsäuregruppen, Anhydridgruppen oder Aminogruppen, wobei unter den Aminogruppen die tertiären Aminogruppen bevorzugt sind.

Als Monomere mit anionischen Gruppen kommen üblicherweise aliphatische, cycloaliphatische, araliphatische oder aromatische Carbonsäuren und Sulfonsäuren in Betracht, die mindestens eine alkoholische Hydroxylgruppe oder mindestens eine primäre oder sekundäre Aminogruppe tragen. Bevorzugt sind die Hydroxyalkylcarbonsäuren, vor allem diejenigen mit 3 bis 10 Kohlenstoffatomen, wie sie auch in der US-A 3,412,054 beschrieben sind. Besonders bevorzugt ist die Dimethylolpropionsäure (DMPA).

Weiterhin eignen sich als Komponente d) entsprechende Dihydroxysulfonsäuren und Dihydroxyphosphonsäuren oder basische Phosphine, wie Diethyl-β-hydroxyethylphosphin, Methyl-bis-β-hydroxyethyl-phosphin und Tris-β-hydroxymethylphosphin sowie Bis-(α-hydroxyisopropyl)-phosphinsäure, Hydroxyalkanphosphinsäure und Phosphorsäure-bis-glycolester.

Ansonsten geeignet sind Hydroxyverbindungen mit einem Molekulargewicht von über 500 bis 10.000 g/mol mit mindestens zwei Carboxylatgruppen, die beispielsweise aus der DE-A 3 911 827 bekannt sind. Sie sind durch Umsetzung von Polyhydroxyverbindungen, bevorzugt Dihydroxyverbindungen mit Tetracarbonsäuredianhydriden, wie Pyromellithsäuredianhydrid oder Cyclopentantetracarbonsäuredianhydrid, im Molverhältnis 2 : 1 bis 1,05 : 1 in einer Polyadditionsreaktion erhältlich. Als Polyhydroxyverbindungen sind insbesondere die unter b1.2) und b 1.3) aufgeführten niedermolekularen Di- und Polyole geeignet.

Werden zur Herstellung der erfindungsgemäßen Polyurethan-Hybrid-Dispersionen anionische Gruppen tragende Polyurethane eingesetzt, so tragen diese vorzugsweise Carboxylat- und/oder Sulfonatgruppen.

Als kationische Gruppen tragende Komponente d) sind vor allem Verbindungen mit tertiären Aminogruppen von besonderer praktischer Bedeutung, beispielsweise Tris-(hydroxyalkyl)-amine, N,N'-Bis(hydroxyalkyl)-alkylamine, N-Hydroxyalkyldialkylamine, Tris-(aminoalkyl)-amine, N,N'-Bis(aminoalkyl)alkylamine, N-Aminoalkyl-dialkylamine, wobei die Alkylreste und Alkandiyl-Einheiten dieser tertiären Amine unabhängig voneinander aus einem bis sechs Kohlenstoffatomen bestehen. Weiterhin kommen tertiäre, Stickstoffatome aufweisende Polyether mit vorzugsweise zwei endständigen Hydroxygruppen, wie sie z.B. durch Alkoxylierung von zwei an Aminstickstoff gebundene Wasserstoffatome aufweisenden Aminen, z.B. Methylamin, Anilin oder N,N'-Dimethylhydrazin in an sich üblicher Weise zugänglich sind, in Betracht. Derartige Polyether weisen im allgemeinen ein zwischen 500 und 6.000 g/mol liegendes Molekulargewicht auf.

Diese tertiären Amine werden entweder mit Säuren, bevorzugt starken Mineralsäuren, wie Phosphorsäure, Schwefelsäure, Halogenwasserstoffsäuren, oder mit starken organischen Säuren, wie beispielsweise Ameisensäure oder Essigsäure, oder durch Umsetzung mit geeigneten Quaternisierungsmitteln, wie C₁₋₆-Alkylhalogeniden, z.B. Alkylbromiden oder -chloriden, in die Ammoniumsalze überführt.

Die als Komponente d) eingesetzten Verbindungen können vor, während oder vorzugsweise nach der Isocyanat-Polyaddition in die ionische Form überführt werden, da sich die ionischen Monomeren im Reaktionsgemisch häufig nur schwer lösen. Besonders bevorzugt liegen die Carboxylatgruppen in Form ihrer Salze mit einem Alkaliion oder einem Ammoniumion als Gegenion vor.

Als Komponente e) können zur Herstellung des erfindungsgemäßen Polyurethans gegebenenfalls Verbindungen mit mindestens einer gegenüber Isocyanaten reaktionsfähigen Gruppe und mit mindestens einer olefinisch ungesättigten Doppelbindung eingesetzt werden. Vorzugsweise ist die olefinisch ungesättigte Doppelbindung leicht einer radikalischen Polymerisation zugänglich und besonders bevorzugt handelt es sich um eine durch aromatische Gruppen oder durch Carbonylgruppen aktivierte Doppelbindung wie sie beispielsweise in Styrol oder in Acrylsäure, Methacrylsäure oder deren Estern vorkommt.

Im folgenden wird bei Bezugnahme auf Acrylsäure und Methacrylsäure oder deren Derivate die Schreibweise (Meth)acrylsäure, wie beispielsweise Poly(meth)acrylsäure benutzt.

Werden als Komponente e) Verbindungen mit lediglich einer Isocyanaten gegenüber reaktionsfähigen Gruppe eingesetzt, so werden die olefinisch ungesättigten Doppelbindungen am Ende der Polyurethankette eingebaut. Bei der Verwendung von zwei oder mehr gegenüber Isocyanaten reaktionsfähigen Gruppen aufweisenden und mindestens einer olefinisch ungesättigten Doppelbindung enthaltenden Verbindung als Komponente e) erfolgt der Einbau bei entsprechender Reaktionsführung in der Regel in der Polyurethankette, obwohl auch hier ein Einbau am Kettenende möglich ist. Unter *"Einbau in der Polyurethankette"* wird im erfindungsgemäßen Sinne sowohl der Einbau der Doppelbindung als Teil des Polymerrückgrats als auch eine Einführung der Doppelbindung in Form einer Seitenkette verstanden. Als geeignete Hydroxylgruppen und mindestens eine olefinisch ungesättigte Doppelbindung enthaltende Monomere kommen beispielsweise Hydroxyalkyl(meth)acrylate, wie 2-Hydroxyethyl(meth)acrylat, 2-Hydroxypropyl(meth)acrylat und 4-Hydroxybutyl(meth)acrylat, in Frage. Ebenfalls geeignet sind Polypropylenglycolmono(meth)acrylate und Polyethylenglycolmono(meth)acrylate. Zur Einführung von mehreren olefinisch ungesättigten Doppelbindungen sind die Polymethacrylate von mehrwertigen Alkoholen, wie Glycerindi(meth)acrylat, Trimethylolpropan-di(meth)acrylat, Pentaerythrit-di- oder Pentaerythrit-tri(meth)acrylat, geeignet.

Unter Verwendung entsprechender Polyolkomponenten mit mindestens zwei Hydroxylgruppen können die olefinisch ungesättigten Doppelbindungen nicht nur an das Kettenende der Polyurethankette sondern auch als Seitenkette des Polymerrückgrats eingebaut werden. Hierzu sind beispielsweise Verbindungen wie Glycerinmono(meth)acrylat, Trimethylolpropanmono(meth)acrylat, Pentaerythrit-mono- oder Pentaerythrit-di(meth)acrylat geeignet. Ebenfalls zu diesem Zweck einsetzbar sind die Ringöffnungsprodukte von (Meth)acrylsäure mit Bis-Epoxiden wie beispielsweise den Glycidylethern von Bisphenol-A, Butandiol-1,4 und Hexandiol-1,6.

Gegebenenfalls können als Komponente e) auch oligomere oder polymere Verbindungen, die mindestens eine gegenüber Isocyanaten reaktionsfähige Gruppe und mindestens eine olefinisch ungesättigte Doppelbindung tragen, eingesetzt werden. Hierzu zählen beispielsweise Polyester, die unter Zuhilfenahme olefinisch ungesättigter Di- oder Polyole oder vorzugsweise unter Zuhilfenahme olefinisch ungesättigter Dicarbonsäuren oder Polycarbonsäuren hergestellt wurden. Bevorzugt ist die Verwendung solcher Polyester die unter Verwendung der unter b 1.1) und b 1.2) beschriebenen Komponenten unter zumindest anteiligem Ersatz der Komponente b 1.1) durch ungesättigte Dicarbonsäuren, wie beispielsweise Maleinsäure, Maleinsäureanhydrid oder Fumarsäure herstellbar sind. In diesem Fall wird die Doppelbindung als Bestandteil des Polymerrückgrats innerhalb desselben eingebaut.

Zur Neutralisation werden die im erfindungsgemäßen Polyurethan enthaltenen Säuregruppen vor oder bevorzugt nach dem Einbau in die Polyurethankette mit einem basischen Neutralisationsmittel neutralisiert. Als basische Neutralisationsmittel sind in der Regel beispielsweise die Alkalimetalle wie Li, Na oder K sowie die Erdalkalimetalle wie Ca, Mg, Ba oder Sr geeignet, obwohl sie im Rahmen der vorliegenden Erfindung nicht bevorzugt sind. Besser geeignet und im Rahmen der vorliegenden Erfindung bevorzugt sind alle Salze der o.g. Metalle, die in der Lage sind unter Neutralisation der Säuregruppen zu reagieren, insbesondere die Carbonate, die Hydrogencarbonate oder die Hydroxide wie beispielsweise LiOH, NaOH, KOH oder Ca(OH)₂.

Ebenso zur Neutralisation geeignet und im Rahmen der vorliegenden Erfindung besonders bevorzugt sind organische, stickstoffhaltige Basen wie beispielsweise Ammoniak und Amine wie Trimethylamin, Triethylamin, Tributylamine, Dimethylanilin, Dimethylethanolamin, Methyldiethanolamin oder Triethanolamin sowie deren Gemische. Die Neutralisation mit den stickstoffhaltigen, organischen Basen kann in organischer oder in wäßriger Phase erfolgen. Mit stickstoffhaltigen Basen neutralisierte Verbindungen der Komponente d) eignen sich daher in der Regel auch in neutralisierter Form zum Einbau in das Polyurethan in organischer Lösung.

Wenn eine Neutralisation der Säuregruppen gewünscht wird, kann das Neutralisationsmittel in einer solchen Menge zugesetzt werden, daß ein ausreichender Anteil der Säuregruppen, in der Regel etwa 0,1 bis 100%, neutralisiert wird.

Im erfindungsgemäßen Polyurethan enthaltene ionisierbare Gruppen, die zu anionischen oder kationischen Gruppen durch Basen- oder Säurezugabe oder durch Quaternisierung umwandelbar sind, sind in der Regel jedoch mindestens zu 10%, bevorzugt zu 25% und insbesondere bevorzugt mindestens zu 50% neutralisiert. Es ist jedoch ebenfalls möglich, die im erfindungsgemäßen Polyurethan enthaltenen ionisierbaren Gruppen zu wenigstens 75% oder beispielsweise auch weitgehend vollständig, d.h. zu etwa 100%, zu neutralisieren.

Das Polyurethanharz kann durch gleichzeitige Umsetzung aller Ausgangsverbindungen hergestellt werden. In vielen Fällen ist es jedoch zweckmäßig, das Polyurethanharz stufenweise herzustellen. So ist es z.B. möglich, aus den Komponenten a) und b) ein Isocyanatgruppen-haltiges Prepolymer herzustellen, das dann gegebenenfalls mit den Komponenten c), d) oder e) weiter umgesetzt wird.

Die Umsetzung der Komponenten a) bis e) kann auch in Gegenwart von Katalysatoren wie z.B. Dibutylzinndilaurat, Dubutylzinndimaleat oder tertiären Aminen durchgeführt werden. Die einzusetzenden Mengen der Komponenten a), b), c), d), und e) ergeben sich aus dem angestrebten Zahlenmittel des Molekulargewichts und dem angestrebten Gehalt an ionischen Gruppen. Die polymerisierbaren olefinisch ungesättigten Doppelbindungen können durch Einsatz von polymerisierbare olefinisch ungesättigte Doppelbindungen aufweisenden Komponenten e) in die Polyurethanmoleküle eingeführt werden.

Die fertigen Polyurethane können noch funktionelle Gruppen zur späteren Vernetzung tragen. Dies können Gruppen sein, die mit Polyisocyanaten reagieren, wie beispielsweise Hydroxygruppen oder Aminogruppen. Die Polyurethane können aber auch als Endgruppen beispielsweise Isocyanatgruppen oder insbesondere blockierte Isocyanatgruppen enthalten, die in einem nachfolgenden Einbrennprozeß zur Vernetzung mit beispielsweise Hydroxygruppen führen. Es ist im Sinne der Erfindung nicht bevorzugt, eine nachträgliche Vernetzung der Bindemittel mit toxischen, gegebenenfalls flüchtigen Substanzen wie beispielsweise Hydrazin oder dessen Derivaten durchzuführen. Die Gegenwart derartiger Verbindungen in den Beschichtungsmittelzusammensetzungen führt zu Transport- und Lagerungsproblemen sowie zu einem erhöhten Gesundheitsrisiko für den Anwender. Bevorzugt weisen die erfindungsgemäß eingesetzten Polyurethane daher keine Carbonylgruppen auf, über die eine solche Vernetzung stattfinden könnte.

Üblicherweise wird die Herstellung der Polyurethanharze in Gegenwart von organischen Lösemitteln durchgeführt, wenngleich auch eine Herstellung in Substanz möglich aber nicht bevorzugt ist. Wenn die Herstellung des Polyurethanharzes ohne Lösemittel durchgeführt wurde, dann muß zur Durchführung des erfindungsgemäßen Verfahrens vor der Polymerisation der Verbindungen mit mindestens einer olefinisch ungesättigten Doppelbindung Lösemittel zugegeben werden. Als Lösemittel sind grundsätzlich alle Lösemittel geeignet, die sowohl die zur Polyurethanharzherstellung eingesetzten Monomerkomponenten als auch das fertige Polyurethanharz in ausreichender Menge lösen, ohne daß es zu Koagulations- oder Ausfällungserscheinungen kommt. Als Lösemittel dienen in der Regel flüssige, aliphatische Ketone wie beispielsweise Aceton, Methylethylketon oder Methylisobutylketon, Ester aliphatischer Monocarbonsäuren wie beispielsweise Essigsäureethylester, Essigsäurepropylester, Essigsäuremethylester oder Essigsäureisobutylester, aromatische Kohlenwasserstoffe wie beispielsweise Toluol oder Xylol, halogenierte aromatische Kohlenwasserstoffe wie beispielsweise Chlorbenzol und Dichlorbenzol sowie stickstoffhaltige, polare, aprotische Lösemittel wie Dimethylformamid (DMF), Dimethylacetamid (DMAc) oder N-Methylpyrrolidon. Die angegebenen Lösemittel können alleine oder im Gemisch verwendet werden, wobei jedoch mindestens das eine oder eines der benutzten Lösemittel, das keine olefinisch ungesättigten Doppelbindungen enthalten darf, wassermischbar sein und einen Siedepunkt bei Normaldruck von weniger als 100°C aufweisen muß.

Unter *"wassermischbar"* wird im Sinne der vorliegenden Erfindung eine mindestens 10, bevorzugt mindestens etwa 15 oder 20 Gew.-%ige Lösbarkeit des Lösemittels in Wasser verstanden.

Besonders bevorzugt werden daher im Sinne der Erfindung Lösemittelgemische eingesetzt, die als Lösemittel mit einem Siedepunkt von weniger als 100 °C beispielsweise Aceton oder Methylethylketon enthalten, vorzugsweise werden diese Lösemittel alleine oder im Gemisch als einzige Lösemittel oder zumindest in überwiegendem Anteil am Lösemittelgemisch eingesetzt.

Zur Herstellung der Hybridpolymeren werden in der beschriebenen wäßrigen Polyurethanharzdispersion, die eines oder mehrere der angegebenen Lösemittel enthält, Verbindungen mit mindestens einer olefinisch ungesättigten Doppelbindung oder ein Gemisch aus Verbindungen mit mindestens einer olefinisch ungesättigten Doppelbindung in Gegenwart eines wasserlöslichen oder wasserunlöslichen Initiators oder eines Gemischs verschiedener wasserlöslicher oder wasserunlöslicher Initiatoren radikalisch polymerisiert, wobei das Gewichtsverhältnis zwischen dem Polyurethanharz und der mindestens eine olefinisch ungesättigte Doppelbindung enthaltenden Verbindung bzw. dem Gemisch aus mindestens einer olefinisch ungesättigte Doppelbindung enthaltenden Verbindungen zwischen 1:10 und 10:2, vorzugsweise zwischen 1:4 und 4:1, liegt.

Als Verbindungen mit mindestens einer olefinisch ungesättigten Doppelbindung können eingesetzt werden:
(i) aliphatische oder cycloaliphatische Ester der Acrylsäure oder Methacrylsäure, die weder Hydroxyl- noch Carboxylgruppen enthalten oder ein Gemisch aus zwei oder mehr solcher Ester und
(ii) mindestens eine Hydroxylgruppe im Molekül tragende Verbindungen mit mindestens einer olefinisch ungesättigten Doppelbindung oder ein Gemisch aus zwei oder mehr solcher Verbindungen und
(iii) mindestens eine Carboxylgruppe im Molekül tragende Verbindungen mit mindestens einer olefinisch ungesättigten Doppelbindung oder ein Gemisch aus zwei oder mehr solcher Verbindungen und
(iv) weitere von (i), (ii) und (iii) verschiedene Verbindungen mit mindestens einer olefinisch ungesättigten Doppelbindung oder ein Gemisch aus zwei oder mehr solcher Verbindungen
sowie Gemische aus den Komponenten (i), (ii), (iii), und/oder (iv).

In der Regel werden Verbindungen der Gruppe (i), gegebenenfalls zusammen mit Verbindungen der Gruppe (iv), eingesetzt. In untergeordneten Mengen können auch Verbindungen der Gruppen (ii) und (iii) zugemischt werden, wobei deren Anteil jedoch üblicherweise jeweils weniger als 10 Gew.-% beträgt.

Als Komponente (i) können z.B. eingesetzt werden: Cyclohexylacrylat, Cyclohexylmethacrylat, Alkylacrylate und Alkylmethacrylate mit bis zu 20 Kohlenstoffatomen im Alkylrest wie z.B. Methyl-, Ethyl-, Propyl-, Butyl-, Hexyl-, Ethylhexyl-, Stearyl- und Laurylacrylat und -methacrylat oder Gemische aus zwei oder mehr dieser Verbindungen.

Als Komponente (ii) können z.B. eingesetzt werden: Hydroxyalkylester der Acrylsäure, Methacrylsäure oder einer anderen α,β-ethylenisch ungesättigten Carbonsäure. Diese Ester können sich von einem Alkylenglycol ableiten, das mit der Säure verestert ist, oder sie können durch Umsetzung der Säure mit einem Alkylenoxid erhalten werden. Als Komponente (ii) werden vorzugsweise Hydroxyalkylester der Acrylsäure und Methacrylsäure, in denen die Hydroxyalkylgruppe bis zu 6 Kohlenstoffatome enthält, oder Gemische aus zwei oder mehr dieser Hydroxyalkylester eingesetzt. Als Beispiele für derartige Hydroxyalkylester werden 2-Hydroxyethylacrylat, 2-Hydroxypropylacrylat, 2-Hydroxypropylmethacrylat, 2-Hydroxypropylacrylat, 3-Hydroxypropylmethacrylat, 2-Hydroxyethylmethacrylat, 3-Hydroxybutyl(meth)acrylat oder 4-Hydroxybutyl(meth)acrylat genannt. Entsprechende Ester von anderen ungesättigten Säuren, wie z.B. Ethacrylsäure, Crotonsäure und ähnlichen Säuren mit bis zu etwa 6 Kohlenstoffatomen pro Molekül können ebenso eingesetzt werden. Wenn Komponenten mit zwei oder mehr olefinisch ungesättigten Doppelbindungen erhalten werden sollen, so bietet sich die Umsetzung von beispielsweise Acrylsäure oder Methacrylsäure mit Polyolen mit mindestens drei OH-Gruppen an, wobei die Stöchiometrie bei der Umsetzung derart kontrolliert wird, daß mindestens eine Hydroxygruppe frei bleibt. Solche Verbindungen können ebenfalls als Komponente (ii) benutzt werden.

Als Komponente (iii) werden vorzugsweise Acrylsäure und/oder Methacrylsäure eingesetzt. Es können aber auch andere ethylenisch ungesättigte Säuren mit bis zu 6 Kohlenstoffatomen im Molekül eingesetzt werden. Als Beispiele für solche Säuren werden Ethacrylsäure, Crotonsäure, Maleinsäure, Fumarsäure und Itaconsäure genannt.

Als Komponente (iv) können z.B. eingesetzt werden: vinylaromatische Kohlenwasserstoffe wie Styrol, α-Alkylstyrol und Vinyltoluol, Acryl- und Methacrylamid und Acryl- und Methacrylnitril oder Gemische aus diesen Komponenten.

Ebenfalls als Komponente (iv) können Verbindungen eingesetzt werden, die mindestens zwei radikalisch polymerisierbare Doppelbindungen im Molekül enthalten. Als Beispiele werden genannt: Divinylbenzol, p-Methyldivinylbenzol, o-Nonyldivinylbenzol, Ethandioldi(meth)acrylat, 1,4-Butandioldi(meth)acrylat, 1,6-Hexandioldi(meth)acrylat, Trimethylolpropantri(meth)acrylat, Pentaerythritdi(meth)acrylat, Allylmethacrylat, Diallylphthalat, Butandioldivinylether, Divinylethylenharnstoff, Divinylpropylenharnstoff, Maleinsäurediallylester und dergleichen.

Weiterhin fallen unter Komponente (iv) höhermolekulare Verbindungen, die mindestens eine olefinisch ungesättigte Doppelbindung aufweisen, die radikalisch polymerisierbar ist. Hierzu zählen beispielsweise ungesättigte Polyester, die beispielsweise unter Verwendung einer olefinisch ungesättigte Doppelbindungen enthaltenden Polycarbonsäure, vorzugsweise einer Dicarbonsäure, hergestellt wurden oder olefinisch ungesättigte Polyacrylate, die beispielsweise in einer sich der Polymerisation anschließenden polymeranalogen Umsetzung mit einer olefinisch ungesättigte Doppelbindungen enthaltenden Verbindung funktionalisiert wurden. Ebenfalls möglich ist der Einsatz von Polyurethanen mit mindestens einer olefinisch ungesättigten Doppelbindung wie sie weiter oben beschrieben wurden als Komponente (iv). Im letztgenannten Fall ist es jedoch bevorzugt, wenn neben dem als Komponente (iv) vorliegenden Polyurethan noch ein weiteres Polyurethan ohne olefinisch ungesättigte Doppelbindungen vorliegt.

Vorzugsweise werden als Verbindungen mit mindestens einer olefinisch ungesättigten Doppelbindung Styrol, Acrylsäure, Methacrylsäure und/oder deren Derivate eingesetzt.

Besonders bevorzugt ist der Einsatz von Acrylsäurederivaten, insbesondere deren Estern, alleine oder im Gemisch mit Styrol, wobei der Styrolanteil am Gemisch bis zu etwa 80% betragen kann.

Als wasserunlösliche Initiatoren können beispielsweise wasserunlösliche Azoverbindungen und wasserunlösliche Peroxyverbindungen eingesetzt werden.

Als Beispiele für wasserunlösliche Peroxyverbindungen werden 2,2-Azo-bis-(isobutyronitril), 2,2'-Azo-bis-(isovaleronitril), 1,1'-Azo-bis-cyclohexancarbonitril) und 2,2'-Azo-bis(2,4-dimethylvaleronitril) genannt. Als Beispiele für wasserunlösliche Peroxyverbindungen werden t-Amylperoxyethylhexanoat, t-Butylperoxyethylhexanoat, Dilaurylperoxid, Dibenzoylperoxid, Di-t-butylperoxid oder 1,1-Dimethyl-3-hydroxybutyl-(1)-peroxyethylhexanoat genannt. Ebenfalls möglich ist der Einsatz von wasserlöslichen Initiatoren, wobei der Einsatz von t-Butylhydroperoxid oder Wasserstoffperoxid bevorzugt ist. Ebenfalls einsetzbar sind sogenannte Redoxinitiatoren, wie beispielsweise das System H₂O₂/Fe²⁺ oder Initiatorsysteme wie Ascorbinsäure und/oder Isoascorbinsäure zusammen mit H₂O₂ oder tert.-Butylhydroperoxid (TBHP).

Die Polymerisation des ethylenisch ungesättigten Monomeren bzw. des Gemischs aus zwei oder mehr ethylenisch ungesättigten Monomeren kann durchgeführt werden, indem das ethylenisch ungesättigte Monomere bzw. das Gemisch aus zwei oder mehr ethylenisch ungesättigten Monomeren der wäßrigen Polyurethanharzdispersion langsam zugegeben werden. Dabei ist es möglich, sowohl die gesamte Menge der Monomeren auf einmal zuzugeben als auch nur einen Teil vorzulegen und den Rest im Verlauf der Reaktion nachzudosieren. Die zu polymerisierenden Monomere können jedoch auch mit Hilfe eines Teils der Polyurethanharzdispersion und Wasser zu einer Präemulsion verarbeitet werden, die dann langsam der Vorlage zugegeben wird. Die Zulaufzeit der zu polymerisierenden Monomeren beträgt im allgemeinen 1 bis 5, vorzugsweise etwa 1,5 bis 3,5 Stunden. Die Initiatoren können der Vorlage zugesetzt werden oder zusammen mit den Monomeren zugetropft werden. Sie können auch anteilsweise der Vorlage zugegeben werden, die einen Teil der Monomeren enthält. Der Rest an Initiator wird dann mit den restlichen Monomeren zudosiert. Die Reaktionstemperatur ergibt sich aus der Zerfallsgeschwindigkeit des Initiators bzw. Initiatorgemischs und kann ggf. durch geeignete organische Redoxsysteme herabgesetzt werden. Die Polymerisation des ethylenisch ungesättigten Monomeren bzw. des Gemischs aus zwei oder mehr ethylenisch ungesättigten Monomeren erfolgt im allgemeinen bei einer Temperatur von etwa 30 bis 100°C, insbesondere bei einer Temperatur von 60 bis 95°C. Wenn bei Überdruck gearbeitet wird, können die Reaktionstemperaturen über 100°C ansteigen.

Nach erfolgter Polymerisation wird das wassermischbare Lösemittel, das keine olefinisch ungesättigten Doppelbindungen und einen Siedepunkt von weniger als 100°C aufweist, destillativ aus dem Reaktionsgemisch entfernt. Die Destillation wird in der Regel nach dem Fachmann allgemein bekannten Methoden bei Normaldruck oder bei vermindertem Druck, wie beispielsweise durch Vakuumdestillation, durchgeführt. Das wassermischbare Lösemittel ohne olefinisch ungesättigte Doppelbindung mit einem Siedepunkt von weniger als 100°C wird dabei so vollständig wie möglich aus der Dispersion entfernt. Es sollten dabei weniger als 5 Gew.-%, bevorzugt weniger als 2 Gew.-% und besonders bevorzugt weniger als 1 Gew.-% des genannten Lösemittels in der Dispersion verbleiben.

Aus den in der oben beschriebenen Art und Weise erzeugten wäßrigen Polyurethan-Hybrid-Dispersionen kann der Fachmann wäßrige Beschichtungsmittelzusammensetzungen herstellen.

Gegenstand der Erfindung ist daher auch eine Polyurethan-Hybrid-Dispersion, erhältlich durch radikalische Polymerisation, mindestens einer Verbindung mit mindestens einer olefinisch ungesättigten Doppelbindung in Gegenwart mindestens eines Polyurethans in einem Gemisch aus Wasser und einem oder mehreren organischen Lösemitteln, dadurch gekennzeichnet, daß mindestens ein organisches Lösemittel wassermischbar ist, keine olefinisch ungesättigte Doppelbindung und einen Siedepunkt von weniger als 100 °C aufweist und nach der radikalischen Polymerisation destillativ entfernt wird.

Ein weiterer Gegenstand der vorliegenden Erfindung ist die Verwendung der erfindungsgemäßen Polyurethan-Hybrid-Dispersion oder von nach dem beschriebenen Verfahren hergestellten Polyurethan-Hybrid-Dispersionen, vorzugsweise in Beschichtungsmittelzusammensetzungen, als Beschichtungsmittel oder Klebstoff.

Die erfindungsgemäßen, bzw. erfindungsgemäß hergestellten wäßrigen Beschichtungsmittelzusammensetzungen können neben dem erfindungsgemäß eingesetzten Bindemittel noch weitere, wasserverdünnbare Kunstharze wie z.B. Aminoplastharze, Polyurethanharze, Polyacrylatharze, Polyesterharze und dergleichen enthalten. Diese Bindemittel sind mit vielen zusätzlich eingesetzten Bindemitteln wie z.B. Aminoplastharzen und Polyesterharzen gut verträglich.

Die erfindungsgemäßen bzw. erfindungsgemäß hergestellten wäßrigen Beschichtungsmittelzusammensetzungen können weiterhin farbgebende Pigmente auf anorganischer Basis, wie z.B. Titandioxid, Eisenoxid, Ruß oder dergleichen, farbgebende Pigmente auf organischer Basis sowie übliche Metallpigmente (z.B. handelsübliche Aluminiumbronzen, Edelstahlbronzen) und nichtmetallische Effektpigmente (z.B. Perlglanz- oder Interferenzpigmente) enthalten.

Die nach dem erfindungsgemäßen Verfahren hergestellten wäßrigen Beschichtungsmittelzusammensetzungen können auf beliebige Gegenstände aus Substraten wie z.B. Metall, Holz, Kunststoff oder Papier aufgebracht werden. Der Auftrag kann direkt erfolgen oder nach Auftrag einer Grundierung und eines Füllers.

Gegenstand der Erfindung sind daher auch Gegenstände, die mit einer erfindungsgemäßen Polyurethan-Hybrid-Dispersion als Beschichtungsmittel oder Klebstoff beschichtet oder verklebt sind.

Die erfindungsgemäßen wäßrigen Beschichtungsmittelzusammensetzungen können durch Spritzen, Rakeln, Tauchen, Walzen oder ähnliche, in der Beschichtungsmittelindustrie übliche Verfahren, auf das Substrat aufgebracht werden. Die folgenden Beispiele sollen die Erfindung näher erläutern. Alle Angaben zu Prozenten und Teilen sind Gewichtsangaben, wenn nicht ausdrücklich etwas anderes angegeben wird.

Die nach dem erfindungsgemäßen Verfahren hergestellten Beschichtungsmittel oder Klebstoffe ergeben im Vergleich zu nach konventionellen Verfahren hergestellten Beschichtungsmitteln oder Klebstoffen verbesserte Beschichtungen oder Verklebungen mit wenigstens einem der folgenden Merkmale, wie geringem Eigengeruch, geringer Toxizität, hohem Glanz, guter Anfeuerung, einer guten Beständigkeit gegenüber polaren Lösemitteln oder Wasserdampf sowie einem guten Härtungsverhalten.

Die oben beschriebenen Polyurethan-Hybrid-Dispersionen können auch zur Herstellung von Beschichtungsmitteln, Klebstoffen, Verklebungen und/oder Beschichtungen mit wenigstens einem der folgenden Merkmale wie geringem Eigengeruch, verbessertem Glanz, verbesserter Anfeuerung, verbesserter Beständigkeit gegenüber Lösemitteln, insbesondere polaren Lösemitteln und verbessertem Härtungsverhalten, verwendet werden.

### Beispiele

### Polyurethandispersion 1

400 g (0,20 mol) Poly-THF 2000, 59 g (0,44 mol) Dimethylolpropionsäure, 108,1 g (1,2 mol) Butandiol-1,4 und 250 g Methylethylketon wurden vorgelegt. Die Vorlage wurde unter Rühren auf 40°C geheizt. Anschließend wurden 344,8 g (1,98 mol) TDI-80, einem Gemisch aus 80% 2,4- und 20% 2,6-Toluylendiisocyanat, zugegeben. Danach wurde der Ansatz bei 90°C weitergerührt. Nach 3,5 Stunden wurden 500 g Aceton zugegeben und die verdünnte Prepolymer-Lösung wurde auf 30°C abgekühlt. Bei diesem Punkt beträgt der NCO-Wert 0,74% (Theorie: 0,72%). Nacheinander wurden 50 g eines Ioscyanurats des Hexamethylendiisocyanats, mit einem NCO-Gruppen-Gehalt von etwa 22%, und 44,5 g Triethylamin homogen eingerührt. Mit 1.700 g Wasser wurde die Dispersion gebildet. Nach Abdestillieren des Acetons wurde eine opake Dispersion mit einem Feststoffgehalt von 36,4% isoliert.

### Hybrid 1 (Vergleich)

243,1 g VE-Wasser, 472,9 Polyurethandispersion 1 und 0,5 g Triethylamin wurden vorgelegt. Die Vorlage wurde auf 70°C hochgeheizt und danach wurden jeweils 48 g einer 1%-igen, wäßrigen Lösung von t-Butylhydroperoxid und einer 0,5 %-igen, wäßrigen Lösung von Ascorbinsäureammoniumsalz zugegeben. Nach weiteren 2 Minuten wurde mit der Zugabe der weiteren Zuläufe angefangen. Der erste Zulauf aus 120 g Methylmethacrylat, 68 g Butylacrylat und 212 g Styrol wurde innerhalb von 2 Stunden zugegeben. Die weiteren Zuläufe, jeweils 112 g der t-Butylhydroperoxid- und der Ascorbinsäurelösung wurden innerhalb von 2,5 Stunden zugegeben. Die Temperatur wurde während der Zugabe bei 70°C gehalten und am Ende der Zugabe wurde der Ansatz bei 70°C eine Stunde weitergerührt. Es entstand eine milchig aussehende Dispersion mit einem pH-Wert von 7,8 und einem Feststoffanteil von 39,8%. Die Dispersion besaß einen unangenehmen, stechenden Geruch.

### Polyurethandispersion 2

Der Ansatz zur Herstellung der Polyurethandispersion 1 wurde reproduziert. Nach Verdünnung mit Aceton betrug der Isocyanatgehalt 0,74%. Nach Zugabe von Basonat HI 100 und Triethylamin sowie Dispergierung mit Wasser entstand eine opake, acetonhaltige Dispersion.

### Hybrid 2

Sofort nach der Dispergierung wurden 605,2 g der Polyurethandispersion 2, zusammen mit 243,4 g VE-Wasser und 0,5 g Triethylamin vorgelegt. Die weitere Behandlung erfolgte wie bei der Herstellung von Hybrid 1. Am Ende der Nachheizphase wurde das Aceton destillativ entfernt. Es entstand eine opake Dispersion mit einem Feststoffgehalt von 39,7% und einem pH-Wert von 8,1. Diese Dispersion war praktisch geruchlos.

Folgende Prüfungen wurden durchgeführt:

### Lösemittelbedarf

Die Dispersionen wurden auf Glasplatten mit einer Trockenschichtdicke von ca. 25 µm mit steigender Menge an Butylglycol versetzt, bis nach Trocknung die Filmoberfläche in Ordnung war, d.h. frei von Rissen, Blasen, Stippen, Kratern, Trübungen und/oder ähnlichen Störungen, und eine glänzende Oberfläche bildete.

### Oberflächenhärte

Die Oberflächerhärte (Pendelhärte) wurde nach DIN 53157 mit einem König-Gerät aufgenommen. In der Tabelle wird die Anzahl der Ausschläge (Doppelhübe) angegeben.

### Chemikalienbeständigkeit

Die Chemikalientests (Ethanol-, Weichmacher- und Wasserdampftest) wurden nach DIN 68860B an zweischichtigen Lackierungen auf Holz durchgeführt. Die visuelle Beurteilung und die Prüfung der Nagelhärte erfolgten sofort und eine Stunde nach Ende der Belastung (0 = sehr gut; 5 = sehr schlecht).

### Glanz

Der Glanzgrad wurde nach DIN 67 530 an zweischichtigen Lackierungen mit einem Gerät der Fa. B_{YK} (Normrefraktometer Laborsond) auf Holz gemessen. Die Messung erfolgte bei einem Einfallwinkel von 60°.

### Anfeuerung

Die Bestimmung der Anfeuerung erfolgte durch visuellen Vergleich mit Ethyldiglycol (0), Butyldiglycol (1) und Ethylenglycol (3). Der Auftrag der Vergleichssubstanzen erfolgte jeweils in unverdünntem Zustand auf Holz, wobei die Zahlen in Klammern der jeweiligen Standardbewertung entsprechen (0 = beste Bewertung).

In der Tabelle 1 sind die Ergebnisse der Prüfungen dargestellt:

**TABELLE 1**

| **Prüfergebnissse** | | |
|---|---|---|
| **Dispersion** | **Hybrid 1 (Vergleich)** | **Hybrid 2** |
| Butylglycol (Teile/100 Teile) | 12 | 11 |
| Aussehen | transparent | transparent |

| Pendelhärte (∼) | | |
|---|---|---|
| 0,5 h | 21 | 50 |
| 1 h | 41 | 80 |
| 3 h | 80 | 113 |
| 5 h | 93 | 117 |
| 7 h | 104 | 126 |
| 1 d | 122 | 138 |
| 3 d | 129 | 141 |
| 7 d | 134 | 143 |

| Ethanol-Test: | | |
|---|---|---|
| Visuell - sofort | 5 | 2 |
| Nagelhärte - sofort | 5 | 4 |
| Visuell - nach 1 Stunde | 4 | 2 |
| Nagelhärte - nach 1 Stunde | 2 | 2 |

| Weichmachertest: | | |
|---|---|---|
| Visuell - sofort | 5 | 4 |
| Nagelhärte - sofort | 5 | 5 |
| Visuell - nach 1 Stunde | 5 | 4 |
| Nagelhärte - nach 1 Stunde | 3 | 3 |

| Wasserdampftest: | | |
|---|---|---|
| Visuell - sofort | 5 | 2 |
| Nagelhärte - sofort | 5 | 2 |
| Visuell - nach 1 Stunde | 3 | 2 |
| Nagelhärte - nach 1 Stunde | 2 | 2 |
| Glanz (°) | 59 | 63 |
| Anfeuerung | 5 | 3 |

## Patentansprüche

1. Verfahren zur Herstellung einer Polyurethan-Hybrid-Dispersion, bei dem mindestens eine Verbindung mit mindestens einer olefinisch ungesättigten Doppelbindung in Gegenwart mindestens eines Polyurethans in einem Gemisch aus Wasser und einem oder mehreren organischen Lösemitteln radikalisch polymerisiert wird, **dadurch gekennzeichnet, daß** mindestens ein organisches Lösemittel wassermischbar ist, keine olefinisch ungesättigte Doppelbindung und einen Siedepunkt von weniger als 100 °C aufweist und nach der radikalischen Polymerisation destillativ entfernt wird.

2. Verfahren nach Anspruch 1, dadurch gekennzeichnet, daß das mindestens eine Polyurethan eine olefinisch ungesättigte Doppelbindung enthält.

3. Verfahren nach Anspruch 1 oder 2, dadurch gekennzeichnet, daß das mindestens eine Polyurethan in Wasser selbstdispergierbar ist.

4. Verfahren nach einem der vorstehenden Ansprüche, dadurch gekennzeichnet, daß als das mindestens eine Polyurethan ein Polyurethan, das Carboxylat- oder Sulfonat- oder Carboxylat- und Sulfonatgruppen enthält, eingesetzt wird.

5. Verfahren nach einem der vorstehenden Ansprüche, dadurch gekennzeichnet, daß als das mindestens eine organische wassermischbare Lösemittel mit einem Siedepunkt von weniger als 100 °C Methyl-Ethyl-Keton oder Aceton oder ein Gemisch davon eingesetzt wird.

6. Verfahren nach einem der vorstehenden Ansprüche, dadurch gekennzeichnet, daß als mindestens eine Verbindung mit mindestens einer olefinisch ungesättigten Doppelbindung Styrol, Acrylsäure, Methacrylsäure oder deren Derivate oder ein Gemisch aus zwei oder mehr davon eingesetzt wird.

7. Polyurethan-Hybrid-Dispersion, erhältlich durch radikalische Polymerisation mindestens einer Verbindung mit mindestens einer olefinisch ungesättigten Doppelbindung in Gegenwart mindestens eines Polyurethans in einem Gemisch aus Wasser und einem oder mehreren organischen Lösemitteln, dadurch gekennzeichnet, daß mindestens ein organisches Lösemittel wassermischbar ist, keine olefinisch ungesättigte Doppelbindung und einen Siedepunkt von weniger als 100 °C aufweist und nach der radikalischen Polymerisation destillativ entfernt wird.

8. Beschichtungsmittelzusammensetzung, enthaltend eine Polyurethan-Hybrid-Dispersion gemäß Anspruch 7 oder eine Polyurethan-Hybrid-Dispersion, hergestellt nach einem Verfahren gemäß einem der Ansprüche 1 bis 6 sowie weitere übliche Zusatzstoffe.

9. Verwendung einer Polyurethan-Hybrid-Dispersion gemäß Anspruch 7 oder einer Polyurethan-Hybrid-Dispersion, hergestellt nach einem Verfahren gemäß- einem der Ansprüche 1 bis 6, oder einer Beschichtungsmittelzusammensetzung gemäß Anspruch 8 als Beschichtungsmittel oder Klebstoff.
